# FASCICULE DE BREVET EUROPEEN

(11) **EP 2 944 845 B1**
(45) Date de publication et mention de la délivrance du brevet: **01.02.2017**
(21) Numéro de dépôt: 15166218.6
(22) Date de dépôt: 04.05.2015
(51) Int. Cl.: F16G 11/10, A44B 11/10

(54) **DISPOSITIF DE BLOCAGE POUR ÉLÉMENT FILAIRE TEL Q'UNE SANGLE, UNE CORDE, UNE CORDELETTE, UN LACET, ETC.**
VERRIGELUNGSVORRICHTUNG ZUM BLOKIEREN VON EINEM ELEMENT WIE ZUM BEISPIEL EIN BAND, EIN GURT, EINE KORDEL, EIN SCHNÜRSENKEL, USW.
LOCKING DEVICE FOR AN ELONGATED ELEMENT SUCH AS A STRAP, A ROPE, A CORD, A SCHOELACE, ETC.

(30) Priorité: 16.05.2014 FR 1401112
(43) Date de publication de la demande: 18.11.2015
(73) Titulaire: Zedel, 38920 Crolles (FR)
(72) Inventeur: Gaudillere, Antonin, 38100 Grenoble (FR)
(74) Mandataire: Talbot, Alexandre

(56) Documents cités:
- EP-A1- 0 629 793
- WO-A1-2013/191544
- US-A- 307 806

## Description

### Domaine technique de l'invention

L'invention est relative à un dispositif de blocage pour élément filaire tel qu'une sangle, une corde, une cordelette, un lacet, etc.

### État de la technique

Dans le domaine du sport, et notamment celui des sports de montagne, il est important de pouvoir bloquer de manière sure et efficace un ou plusieurs éléments filaires tel que des cordes, des cordelettes ou des sangles.

Cela est par exemple très important pour les casques de protection en escalade et en alpinisme. Le réglage de la position du serre-nuque et des sangles serre-nuque par rapport au tour de tête doit être correctement effectué pour que le casque soit pleinement efficace en cas de choc.

Le casque de protection décrit dans le document EP 558427 au nom de la demanderesse concerne un casque dont le réglage s'effectue grâce à deux molettes internes qui engrènent avec des crans de crémaillères prévues dans le tour de tête et le serre-nuque. Les molettes dépassent partiellement sous le bord latéral de chaque côté de la calotte. L'une des molettes sert pour l'ajustement du tour de tête, et l'autre pour le serre-nuque.

Dans la demande de brevet EP 2138061 également au nom de la demanderesse, le casque de protection comporte un serre-nuque réglable au moyen de deux coulisseaux mobiles à travers une fente de la calotte. Ces deux coulisseaux engrènent avec deux crémaillères solidaires du serre-nuque.

Dans ces deux exemples de l'art antérieur, le réglage est précis et efficace mais doit être effectué par l'utilisateur et demande de l'apprentissage. L'inconvénient est que dans le cadre d'une utilisation en collectivité, il est difficile pour l'encadrant d'effectuer le réglage des casques à la place de l'utilisateur.

Dans le domaine du serrage des lacets de chaussures, la demande de brevet EP 0629793 A1 divulgue un dispositif de blocage de lacets comprenant un corps, un organe de blocage et un capot de manoeuvre doté de deux languettes élastiques. L'organe de blocage est positionné dans une cavité du corps, et le capot de manoeuvre est positionné au dessus du corps. L'organe de blocage et le capot de manoeuvre sont solidaires, de sorte qu'un déplacement du capot de manoeuvre entraîne un déplacement de l'organe de blocage. En l'absence de force extérieure, les languettes élastiques poussent le capot de manoeuvre et donc l'organe de blocage dans une position telle que les lacets sont coincés entre la paroi du corps et l'organe de blocage. Pour serrer les lacets, l'utilisateur doit tendre les lacets et faire translater le dispositif de blocage en poussant sur le corps. A l'inverse, pour desserrer les lacets, l'utilisateur doit tirer sur le capot de manoeuvre afin de placer l'organe de blocage hors de la position de coincement.

Le document WO2013/191544A1 divulgue le dispositif de blocage d'au moins un élément filaire selon le préambule de la revendication 1.

L'utilisation de ce dispositif est relativement intuitive pour le serrage de lacets de chaussures car l'utilisateur peut voir ce qu'il est en train de faire. En revanche, l'utilisation de ce dispositif pour ajuster un serre-nuque de casque de protection s'avère complexe car l'utilisateur doit faire les ajustements sans voir ce qu'il fait.

Il existe donc un besoin de munir les casques de dispositifs de blocage qui soient intuitifs et simples à utiliser, en particulier dans le cadre d'une utilisation en collectivité, où les utilisateurs ne sont pas familiers avec ce type de matériel.

### Objet de l'invention

Un objet de l'invention consiste à réaliser un dispositif de blocage d'au moins un élément filaire qui soit fiable et facile à régler.

A cet effet, le dispositif de blocage comporte
- au moins un organe de blocage destiné à bloquer l'un au moins des éléments filaires par coincement,
- un corps doté d'une cavité configurée pour permettre le passage de l'un au moins des éléments filaires et loger l'un au moins des organes de blocage de sorte que l'un au moins des organes de blocage soit mobile en translation dans la cavité suivant un premier axe jusqu'à une position de coincement de l'un au moins des éléments filaires,
- un capot de manoeuvre, mobile en translation suivant le premier axe par rapport au corps et configuré pour autoriser le déplacement de l'organe de blocage relativement au corps suivant le premier axe,
- des moyens d'entraînement de l'organe de blocage au moyen du capot de manoeuvre.

Les moyens d'entraînement permettent d'une part le déplacement libre de l'organe de blocage selon le premier axe par rapport au capot de manoeuvre et par rapport au corps, et permettent d'autre part le déplacement de l'organe de blocage hors de la position de coincement par actionnement du capot de manoeuvre.

Le capot de manoeuvre peut comporter des éléments de butée limitant le déplacement du corps par rapport au capot de manoeuvre et autorisant un jeu de déplacement entre le corps et le capot de manoeuvre. Les moyens d'entraînement peuvent permettre le déplacement libre de l'organe de blocage selon le premier axe par rapport au capot de manoeuvre et par rapport au corps lorsque le capot de manoeuvre est en butée contre le corps.

Selon un aspect de l'invention, les moyens d'entraînement sont configurés pour se déplacer dans un trou aménagé dans une paroi du corps. Le trou peut être traversant et les moyens d'entraînement peuvent être configurés pour se déplacer dans le jeu dans une paroi du capot de manoeuvre.

Selon une variante de réalisation, des moyens élastiques peuvent être positionnés entre la paroi du corps et l'un au moins des organes de blocage, les moyens élastiques étant configurés pour déplacer l'un au moins des organes de blocage jusqu'à la position de coincement.

Selon un mode de réalisation du dispositif, le capot de manoeuvre comporte une cavité configurée pour loger le corps et permettre le passage de l'un au moins des éléments filaires.

Selon un aspect de l'invention, l'un au moins des organes de blocage comporte au moins un prisme configuré pour bloquer l'un au moins des éléments filaires contre une paroi du corps.

Selon un autre aspect de l'invention, l'un au moins des organes de blocage comporte une roue mobile en rotation suivant un deuxième axe orthogonal au premier axe, la roue étant configurée pour bloquer l'un au moins des éléments filaires contre une paroi du corps.

L'invention peut concerner un casque de protection comportant un dispositif de blocage doté des caractéristiques précitées, le dispositif de blocage pouvant être destiné à serrer ou desserrer des sangles serre-nuque du casque de protection.

L'invention peut aussi être utilisé sur des chaussures à lacets comportant un dispositif de blocage doté des caractéristiques précitées, le dispositif de blocage pouvant être destiné à serrer ou desserrer des lacets.

L'invention peut également concerner un sac à dos comportant un dispositif de blocage doté des caractéristiques précitées, le dispositif de blocage pouvant être destiné à serrer ou desserrer un cordon de fermeture du sac à dos.

L'invention concerne enfin un procédé de serrage de l'au moins des éléments filaires au moyen d'un dispositif de blocage pourvu des caractéristiques précitées, le procédé comportant les étapes suivantes :
- appliquer une tension sur l'un au moins des éléments filaires par rapport au capot de manoeuvre de manière à déplacer l'un au moins des organes de blocage vers une position de déblocage,
- arrêter ladite tension sur l'un au moins des éléments filaires.

Le procédé de desserrage d'au moins un élément filaire comporte quant à lui l'étape suivante :
- faire translater le capot de manoeuvre par rapport au corps jusqu'à ce qu'il engage le déplacement de l'un au moins des organes de blocage vers une position de déblocage de l'un au moins des éléments filaires.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 illustre de façon schématique une vue en perspective d'un mode de réalisation d'un dispositif du blocage;
- les figures 2 et 3 sont des vues en coupe représentant deux positions possibles du dispositif de blocage selon un premier mode de réalisation,
- les figures 4 et 5, sont des vues en perspective tronquée illustrant les deux positions possibles représentées aux figures 2 et 3 du dispositif de blocage,

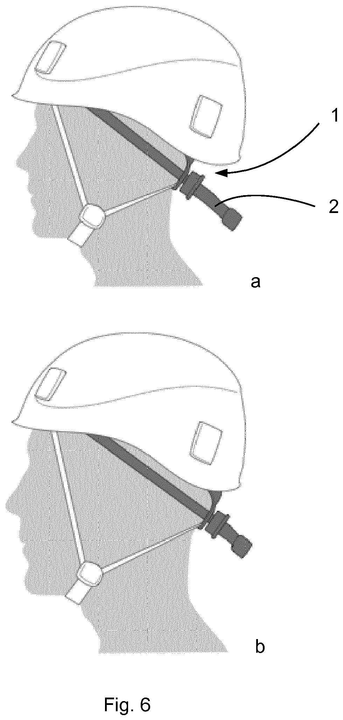

- les figures 6a et 6b illustrent l'utilisation du dispositif sur un casque de protection.

### Description détaillée

L'invention concerne un dispositif de blocage 1 d'au moins un élément filaire 2. Selon le mode de réalisation illustré sur les figures, le dispositif de blocage 1 est configuré pour permettre le blocage et le déblocage de sangles, en particulier de sangles serre-nuque de casque d'escalade.

Pour bloquer le ou les éléments filaires 2, le dispositif de blocage 1 est doté d'au moins un organe de blocage 7 logé dans une cavité 4d d'un corps 4. La cavité 4d du corps est également configurée pour permettre le passage de l'un au moins des éléments filaires 2.

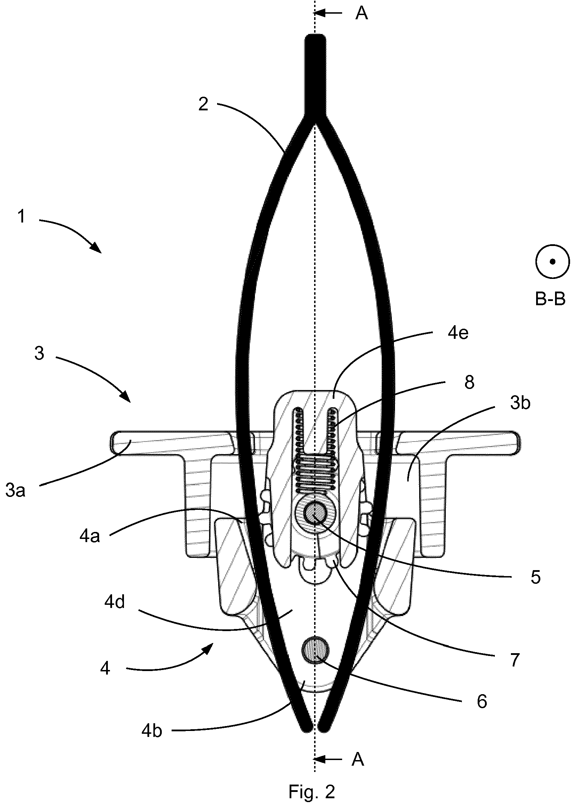

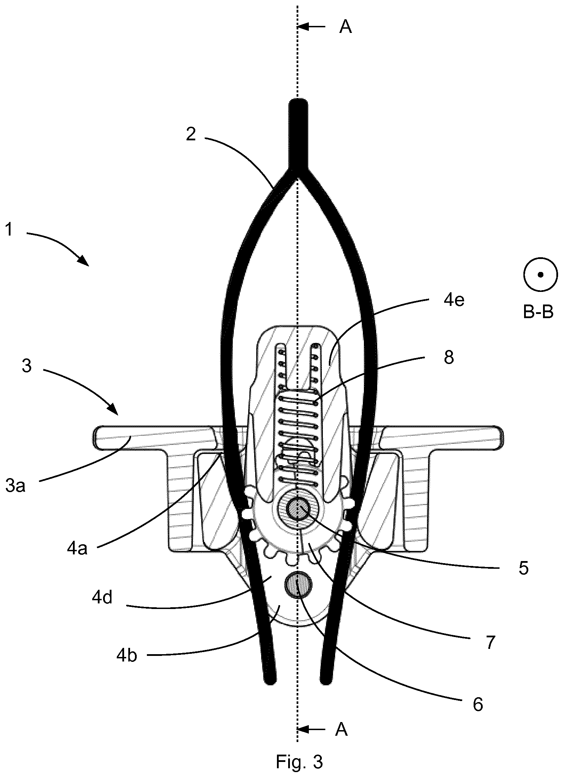

Plus précisément, le corps 4 possède au moins un trou d'entrée 4a et au moins un trou de sortie 4b permettant le passage du ou des éléments filaires 2 dans au moins un canal de déplacement (non représenté). Le canal de déplacement traverse le corps 4. Par exemple, dans le mode de réalisation représenté aux figures 2 et 3, le corps 4 possède deux entrées 4a traversées chacune par une sangle, une sortie 4b, et une cavité 4d de forme sensiblement tronconique dont la base est située du côté des entrées 4a.

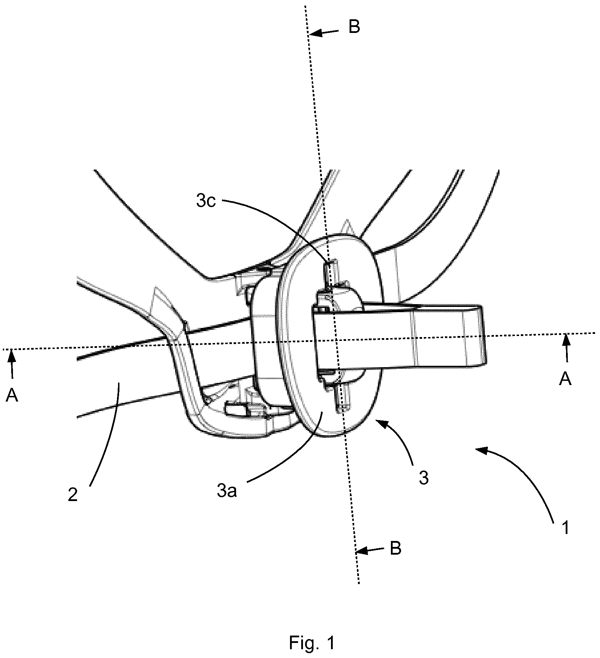

A l'intérieur de la cavité 4d, l'un au moins des organes de blocage 7 est mobile suivant un premier axe AA (cf. figure 1), et avantageusement jusqu'à une position de coincement du ou des éléments filaires 2 contre la paroi du corps 4. De ce fait, une translation de l'organe de blocage 7 dans une première direction suivant l'axe AA permet le coincement de l'un au moins des éléments filaires 2, tandis qu'ils sont libérés par une translation de l'organe de blocage 7 dans une deuxième direction opposée à la première direction. L'organe de blocage 7, le capot 4 et le capot de manoeuvre 3 sont solidaires.

Pour manipuler le dispositif de blocage 1, celui-ci comporte avantageusement un capot de manoeuvre 3. Le capot de manoeuvre 3 est mobile en translation par rapport au corps 4 suivant l'axe AA, et est configuré pour permettre le déplacement de l'organe de blocage 7 par rapport au corps 4. L'organe de blocage 7 peut se déplacer par rapport au capot de manoeuvre 3 et par rapport au corps 4 en même temps. Ainsi, le déplacement du capot de manoeuvre n'entraine pas obligatoirement le déplacement de l'organe de blocage 7.

Le dispositif de blocage 1 comporte avantageusement des moyens d'entraînement 5 de l'organe de blocage 7 au moyen du capot de manoeuvre 3. Les moyens d'entraînement 5 sont configurés de manière à autoriser le déplacement libre de l'organe de blocage par rapport au corps 4 sans accouplement entre le capot de manoeuvre 3 et l'organe de blocage 7. Dans cette première configuration, l'organe de blocage 7 est libre de se déplacer selon l'axe AA par rapport au capot de manoeuvre 3 et par rapport au corps 4 lorsque le capot de manoeuvre 3 est en butée contre le corps 4. Le déplacement de l'organe de blocage 7 peut être réalisé par exemple en actionnant les éléments filaires 2.

Les moyens d'entraînement 5 sont également configurés de manière à déplacer l'organe de blocage 7 hors de la position de coincement par actionnement du capot de manoeuvre 3. Dans ces conditions, si l'organe de blocage 7 est dans sa position de coincement, il suffit de déplacer le capot de manoeuvre 3 pour quitter la position de coincement et réduire la contrainte appliquée sur l'élément filaire 2.

En d'autres termes, le capot de manoeuvre 3 comporte des éléments de butée limitant le déplacement du corps 4 relativement au capot, ces éléments de butée autorisant un jeu de déplacement entre le corps 4 et le capot de manoeuvre 3. Les moyens d'entraînement 5 peuvent se déplacer librement suivant l'axe AA entre ces éléments de butée, de sorte à permettre le déplacement suivant l'axe AA de l'un au moins des organes de blocage 7 par rapport au capot de manoeuvre 3. Le jeu de déplacement est configuré pour autoriser le déplacement du capot de manoeuvre 3 jusqu'à l'un des éléments de butée, de sorte à entraîner la translation de l'un au moins des organes de blocage 7 hors de la position de coincement.

Les moyens d'entraînement 5 peuvent être formés par tout moyen adapté qui permet d'autoriser un déplacement relatif des différentes pièces les unes par rapport aux autres. De manière avantageuse, les moyens d'entraînement 5 comportent au moins un connecteur qui est fixé sur l'un des trois éléments solidaires (i.e. le capot de manoeuvre 3, le corps 4 et l'organe de blocage 7) et qui se déplace à l'intérieur d'une cavité aménagée dans les deux autres éléments.

A titre d'exemple, comme illustré, il est possible d'avoir un connecteur fixé à un organe de blocage 7 et qui se déplace dans des cavités 3b et 4d aménagées respectivement dans le capot de manoeuvre 3 et dans le corps 4.

Dans une variante, il est possible d'avoir un connecteur fixé au capot de manoeuvre 3 et qui se déplace dans des cavités aménagées dans le corps 4 et dans l'organe de blocage 7.

En variante, il est encore possible d'avoir un premier connecteur fixé au capot de manoeuvre 3 et qui se déplace dans une cavité aménagée dans le corps 4. Le corps 4 possède un deuxième connecteur qui se déplace dans une cavité aménagée dans l'organe de blocage 7. Il existe également un connecteur qui relie dans certaines conditions le capot de manoeuvre 3 et l'organe de blocage 7.

Une configuration opposée peut être réalisée avec un premier connecteur fixé au corps 4 et coopérant avant le capot de manoeuvre 3, un deuxième connecteur fixé à l'organe de blocage 7 et coopérant avant le corps 4 et un dernier connecteur qui est fixé au capot de manoeuvre 3 ou à l'organe de blocage 7.

Ces différents modes de réalisation peuvent être combinés, par exemple pour former des connecteurs fixés au capot de manoeuvre 3 et à l'organe de blocage 7. Ces connecteurs se déplacent dans des cavités distinctes formées dans le corps 4 ou dans une même cavité. Si les deux cavités sont distinctes, un connecteur supplémentaire liant le déplacement du capot de manoeuvre 3 par rapport à l'organe de blocage 7 est utilisé.

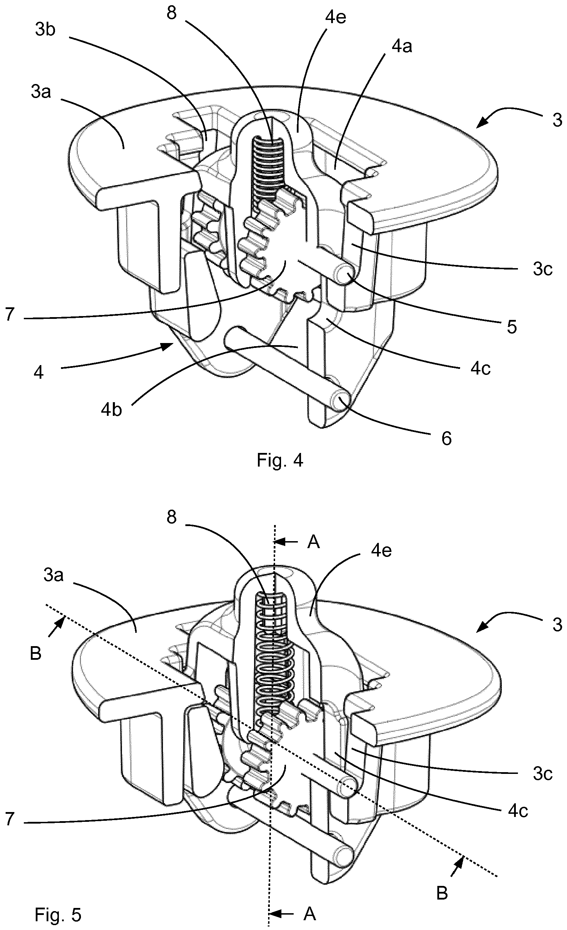

Comme on le verra plus loin, le jeu peut être défini au moyen d'un trou oblong 3c positionné sur les parois du capot de manoeuvre 3 (cf. figures 4 et 5). Le jeu peut également être défini au moyen d'un trou dans l'organe de blocage 7. Il est encore possible de prévoir que le jeu soit défini par une différence de position entre deux connecteurs.

Dans le mode de réalisation illustré aux figures 4 et 5, le connecteur est formé par une tige 5 qui se déplace dans le trou oblong 3c. La tige 5 se déplace également dans le trou 4c aménagé dans le corps 4. On observe que dans une première configuration la tige 5 se déplace dans le trou 4c sans venir en butée sur le trou oblong 3c. Il est donc possible d'avoir un déplacement de l'organe de blocage 7 à l'intérieur du corps 4 et par rapport au capot de manoeuvre 3.

Lorsque le capot de manoeuvre 3 est actionné, le trou oblong 3c se déplace jusqu'à entrer en contact avec la tige 5. En continuant le déplacement du capot de manoeuvre 3, l'organe de blocage 7 est déplacé hors de la position de coincement.

Ces moyens d'entraînement 5 sont configurés pour que l'entraînement de l'organe de blocage 7 avec le capot de manoeuvre 3 intervienne lorsque le capot de manoeuvre 3 se déplace au-delà d'une position seuil par rapport au corps 4 préférentiellement dans une direction de déblocage. De cette manière, lorsque le capot de manoeuvre 3 est dans une zone particulière, l'organe de blocage 7 peut se déplacer indépendamment du capot de manoeuvre 3. L'organe de blocage 7 est par exemple dans une position de coincement du ou des éléments filaires 2, sauf si le ou les éléments filaires 2 tendent à le déplacer hors de la position de coincement.

Lorsque la position seuil est atteinte, il y a une connexion mécanique entre l'organe de blocage 7 et le capot de manoeuvre 3 de sorte que le capot de manoeuvre 3 peut entraîner le déplacement de l'organe de blocage 7 par rapport au corps 4 hors de la position de coincement de l'élément filaire 2.

Si l'organe de blocage 7 est hors de la position de coincement, l'accouplement mécanique entre l'organe de blocage 7 et le capot de manoeuvre 3 est obtenu au delà de la position seuil.

Ainsi, dans certaines conditions, il peut y avoir une connexion mécanique entre le capot de manoeuvre 3 et l'organe de blocage 7 de sorte que le déplacement du capot de manoeuvre 3 entraîne le déplacement de l'organe de blocage 7. Dans d'autres conditions, l'organe de blocage 7 peut se déplacer librement par rapport au capot de manoeuvre 3, il n'y a pas de connexion mécanique directe entre ces deux éléments. Dans cette configuration, un déplacement du capot de manoeuvre 3 par rapport au corps 4 permet de simplement relâcher la contrainte sur l'élément filaire 2.

L'utilisation de moyens d'entraînement 5 comportant un jeu de déplacement ou autorisant un déplacement libre de l'organe de blocage 7 par rapport au capot de manoeuvre 3 est particulièrement avantageux lorsque le dispositif de blocage 1 est configuré de manière à ce que l'utilisateur réalise la préhension du dispositif de blocage 1 par le capot de manoeuvre 3. En effet, dans les dispositifs de l'art antérieur, le capot de manoeuvre 3 est exclusivement utilisé pour réaliser le desserrage et le corps 4 est exclusivement utilisé pour le serrage de l'élément filaire 2. L'actionnement du capot de manoeuvre 3 lors de la phase de serrage rend très difficile le déplacement de l'élément filaire 2.

Pour forcer le ou les organes de blocage 7 à se placer en position de coincement, il peut être envisagé d'ajouter des moyens élastiques 8 entre la paroi du corps 4 et le ou les organes de blocage 7. Les moyens élastiques 8 sont alors en position de repos lorsque le ou les organes de blocage 7 sont en position de coincement, et ils sont contraints lorsque le ou les organes de blocage 7 sont hors de la position de coincement. Les moyens élastiques 8 peuvent être formés par tout dispositif adapté, par exemple un ressort, une lame agissant en flexion, un tube se déformant pour retrouver sa forme initiale.

Lorsque le ou les éléments filaires 2 sont des sangles, il peut être avantageux d'ajouter des moyens élastiques 8 dans le dispositif de blocage. En effet, les sangles ont la propriété de ne pas se déformer lorsqu'on leur applique une force de traction et peuvent contribuer au déplacement de l'organe de blocage 7 hors de la position de coincement.

A l'inverse, lorsque le dispositif de blocage 1 est employé pour serrer des lacets, les moyens élastiques ne sont pas forcément utiles. En effet, des lacets ont généralement une section plus fine lorsqu'on les étire que lorsqu'ils sont au repos. Par conséquent, l'augmentation de section des lacets lorsqu'on ne les étire plus suffit à amorcer le coincement par l'organe blocage 7.

De manière générale, les moyens élastiques 8 ne sont pas nécessaires si l'actionnement de l'élément filaire 2 en direction de la position de coincement est suffisant pour entrainer un déplacement de l'organe de blocage 7 vers la position de coincement.

Les figures 1 à 5 représentent une vue détaillée d'un mode de réalisation d'un dispositif de blocage pouvant être monté sur un serre-nuque de casque de protection.

Pour être fixé sur un serre-nuque, le dispositif de blocage comporte des moyens de fixation 6. Dans cette configuration, le corps 4 est fixé au serre-nuque, ce qui permet de faciliter l'application d'efforts sur les différents éléments du dispositif de blocage 7.

Les moyens de fixation 6 peuvent comporter une tige qui passe au travers d'un ou plusieurs trous aménagés dans le corps 4. La tige ou un autre élément peut être disposé au niveau de la sortie 4b du corps 4 afin de faciliter le positionnement de l'élément filaire dans le corps 4. Ici, chaque sangle passe de part et d'autre de la tige. Les moyens de fixation 6 permettent de limiter le déplacement du dispositif de blocage 1 par rapport à l'objet sur lequel il est fixé, ici un casque. La fixation du dispositif de blocage 1 sur l'objet à régler est réalisée au moyen du corps 4. Dans cette configuration, la force est appliquée sur l'élément filaire 2 en prenant appui sur le casque.

Dans un mode de réalisation particulier, le moyen de fixation peut être utilisé pour empêcher la désolidarisation du capot de manoeuvre 3 par rapport au corps 4. La tige 6 peut être configurée pour former une butée de fin de course. En variante, la butée de fin de course peut être formée par l'élément à ajuster.

Dans le mode de réalisation illustré sur les figures, le capot de manoeuvre 3 est avantageusement doté d'une cavité 3b dont la forme est adaptée pour loger le corps 4 et permettre le passage de l'un au moins des éléments filaires 2 à la fois à travers le corps 4 et à travers le capot de manoeuvre 3. Le capot de manoeuvre 3 est plus particulièrement structuré pour permettre le passage de deux sangles, une de chaque côté du corps 4. Pour faciliter la préhension du capot de manoeuvre 3 par l'utilisateur, celui-ci peut avantageusement être doté d'une portion en saillie 3a.

Un ressort hélicoïdal 8 permet l'application d'une force de rappel depuis le corps 4 sur l'organe de blocage 7 afin de le placer dans la position de coincement de l'élément filaire 2. Dans le mode de réalisation illustré, le ressort hélicoïdal est disposé entre la paroi supérieure du corps 4 et l'organe de blocage 7, et plus précisément à l'intérieur d'un rail de guidage 4e aménagé dans le corps 4.

L'organe de blocage 7 peut par exemple être un prisme de base triangulaire ou trapézoïdale (non représenté), dont la grande base est positionnée du côté des entrées 4a des éléments filaires. Le blocage du ou des éléments filaires 2 est réalisé par frottements entre les parois de la cavité 4d et les côtés latéraux du prisme.

Selon un mode de réalisation alternatif illustré sur les figures, l'organe de blocage 7 peut être une roue libre en rotation selon l'axe longitudinal de la tige 5. Utiliser une roue comme organe de blocage 7 permet de bloquer plusieurs éléments filaires 2 simultanément, même si l'effort de traction est différent sur chaque élément filaire 2. La roue peut éventuellement être pourvue de dents pour augmenter les forces de frottements servant au coincement du ou des éléments filaires 2.

L'organe de blocage 7 peut également comporter plusieurs éléments bloquant, par exemple plusieurs roues ou plusieurs prismes il est également possible de combiner ces deux modes de réalisation.

Ici, l'organe de blocage 7 possède un trou traversant (non représenté) d'axe BB orthogonal à l'axe AA à travers lequel une tige 5 est insérée. La tige 5 vient coopérer avec les trous 4c aménagés dans le corps 4, les trous 3c aménagés dans le capot de manoeuvre 3, pour autoriser le déplacement de l'organe de blocage 7 relativement à ces deux pièces. Les trous 3c et 4c jouent le rôle de rail de guidage pour la tige 5. Les trous 4c sont avantageusement traversants, tandis que les trous 3c peuvent être traversants ou non.

Il est particulièrement avantageux d'utiliser une tige 5 passant à travers les cavités traversantes dans le corps 4 et dans le capot de manoeuvre 3 car la fabrication et la réparation du dispositif de blocage 7 sont facilitées.

Dans cette configuration, le déplacement du capot de manoeuvre 3 par rapport au corps 4 peut être effectué sans déplacement de l'organe de blocage 7 jusqu'à un certain point. Lorsque le capot de manoeuvre 3 est déplacé par rapport au corps au delà d'une position seuil, la tige 5 vient en butée contre le trou 3c, de sorte que le capot de manoeuvre 3 et vient entrer en contact mécanique avec l'organe de blocage 7. A partir de ce moment, il y a entraînement de l'organe de blocage par le capot de manoeuvre 3 ce qui se traduit par un déplacement de l'organe de blocage 7. Toutefois, si l'organe de blocage 7 est déjà en position de déblocage, il n'y a pas obligatoirement contact avec le capot de manoeuvre 3.

Les trous 3c et 4c sont avantageusement formés dans le capot de manoeuvre 3 et dans le corps 4 de manière à ce que la course de déplacement de l'organe de blocage 7 soit formée par les bordures des trous. Dans un mode de réalisation préférentiel, le trou 4c définit les deux butées qui définissent les positions relatives extrêmes entre le corps 4 et l'organe de blocage 7, et le trou 3c définit les deux butées qui définissent les positions relatives extrêmes entre l'organe de blocage 7 et le capot de manoeuvre 3.

De manière avantageuse, pour limiter le déplacement latéral de l'organe de blocage 7 dans la cavité 4d du corps, la tige 5 translate avantageusement dans le rail de guidage 4e du corps 4. Ce rail de guidage 4e est disposé préférentiellement au centre du corps 4 de manière à limiter la déformation de l'organe de blocage si des efforts importants sont appliqués par exemple lors du serrage. Le déplacement latéral est limité selon un axe perpendiculaire à l'axe AA et à l'axe BB. Préférentiellement, le rail de guidage 4e forme une zone de logement des moyens élastiques 8.

On constate qu'il est particulièrement intéressant de dimensionner les cavités 3b du capot de manoeuvre et 4d du corps 4 pour assurer la solidarisation des pièces entre elles et/ou pour réaliser l'entrainement de l'organe de blocage 7 avec le capot de manoeuvre 3. De cette manière, le dispositif est particulièrement compact et robuste car le nombre pièce utilisé est réduit.

En variante, les moyens d'entraînement de l'organe de blocage 7 avec le capot de manoeuvre 3 peuvent être formés par d'autres éléments et notamment par une pièce en saillie par exemple une tige 5 qui se déplace à l'intérieur du corps 4. Ce mode de réalisation est particulièrement intéressant si les cavités 4c ne sont pas traversantes.

Par exemple, une tige solidaire du capot de manoeuvre 3 et faisant saillie à l'intérieur de la cavité 4a du corps 4 peut être utilisée. Lors du déplacement du capot de manoeuvre 3, la tige se déplace jusqu'à entrer en contact avec l'organe de blocage 7 et entrainer son déplacement. Ces moyens peuvent par exemple être configurés pour s'insérer par le trou de sortie 4b dans la cavité 4d du corps 4, et pousser la tige 5 dans la direction de déblocage lorsque l'utilisateur déplace le capot de manoeuvre 3 dans cette même direction.

Ce mode de réalisation est moins intéressant que le précédent car il nécessite d'utiliser une tige qui passe par le corps 4 et par le capot de manoeuvre 3 pour venir actionner l'organe de blocage 7.

Pour utiliser le dispositif de blocage 1 afin de bloquer un ou plusieurs éléments filaires 2, l'utilisateur doit dans un premier temps appliquer une tension sur le ou les éléments filaires 2 par rapport au corps 4, de manière à déplacer le ou les éléments filaires 2 par rapport au dispositif de blocage 1 vers une position de déblocage.

La force appliquée sur le ou les éléments filaires 2 permet de déplacer l'organe de blocage 7 selon la direction A1 (figure 2). L'organe de blocage 7 se déplace vers la position de déblocage et il peut se trouver en butée contre le corps 4 et/ou le capot de manoeuvre 3. De manière avantageuse, l'organe de blocage 7 se trouve en butée contre le corps 4 de manière à profiter d'un maximum d'amplitude pour le passage du ou des éléments filaires 2. La force appliquée sur le ou les éléments filaires 2 vient contrer la force appliquée par les moyens élastiques 8 et le ou les éléments filaires 2 peuvent se déplacer entre l'organe de blocage 7 et la paroi du corps 4.

Dans un mode de réalisation avantageux, la force de tension est appliquée sur le ou les éléments filaires 2 par rapport au capot de manoeuvre 3 qui vient appuyer contre le corps 4. Ce mode de réalisation est particulièrement avantageux, lorsque le ou les éléments filaires 2 rendent difficile l'accès au corps 4, par exemple lorsque au moins deux sangles sont utilisées et passent de part et d'autre de l'organe de blocage 7.

Dès que la force disparaît ou diminue en dessous d'une valeur seuil, l'organe de blocage 7 est placé en position de blocage ou de coincement. Le ou les éléments filaires 2 sont alors coincés entre la paroi du corps 4 et l'organe de blocage 7.

Le fait de tirer sur le ou les éléments filaires 2 par rapport au corps 4 et préférentiellement par rapport au capot de manoeuvre 3, permet à la tige 5 de translater selon la direction AA, et à l'organe de blocage 7 de se déplacer hors de la position de coincement et par rapport aux éléments filaires 2.

Lorsque l'utilisateur l'effort de tension diminue, par exemple lorsque l'utilisateur lâche le capot de manoeuvre 3 et/ou les éléments filaires 2. Les forces de frottement entre les parois de la cavité 4d et l'organe de blocage 7 entraînent le blocage du ou des éléments filaires 2. Ces derniers sont bloqués dans la position souhaitée par l'utilisateur.

Pour réaliser le déblocage du ou des éléments filaires 2, l'actionnement du capot de manoeuvre 3 permet de déplacer l'organe de blocage 7 qui se déplace depuis la position de coincement vers la position de déblocage. L'actionnement du capot de manoeuvre 3 se traduit par un déplacement du capot de manoeuvre 3 par rapport au corps 4. Dans une première partie, le capot 3 est déplacé sans entrainer l'actionnement de l'organe de blocage 7. Ensuite, le capot 3 s'accouple à l'organe de blocage 7 qui quitte la position de coincement.

Dans ce cas de figure, si aucune force n'est appliquée sur le ou les éléments filaires 2, ces derniers se déplacent pour diminuer l'effort de serrage qu'il supporte. Il est également possible d'appliquer une force sur le ou les éléments filaires 2 dans la direction opposée au serrage.

En lâchant le capot de manoeuvre 3, le dispositif de blocage 7 s'immobilise dans la position choisie par l'utilisateur.

Le dispositif de blocage 1 peut judicieusement être utilisé sur des articles de sport, par exemple sur un casque de protection afin de régler les sangles de serre-nuque comme cela est illustré sur les figures. Dans cette configuration, lorsque le casque est placé sur la tête de l'utilisateur, il suffit de tirer sur les éléments filaires 2 pour obtenir le serrage du casque. De la même manière, l'actionnement du capot de manoeuvre 3 permet de desserrer facilement le casque. Le casque peut ainsi être adapté à la taille de la tête de l'utilisateur, et garantir une utilisation optimale du casque.

Le dispositif de blocage 1 peut également être utilisé sur des chaussures à lacets afin de serrer et bloquer ces derniers. Le dispositif empêche tout desserrage intempestif du lacet, pouvant générer un inconfort à l'utilisateur.

Les sacs à dos peuvent également être pourvu d'un dispositif de blocage 1, par exemple pour serrer le cordon d'une jupe d'étanchéité afin de protéger le contenu du sac.

Sans sortir du cadre de l'invention, l'homme du métier peut très bien combiner les différentes caractéristiques techniques qui viennent d'être décrites. Le dispositif de blocage peut par exemple n'être placé sur aucun élément fixe, comme dans le cas d'une utilisation pour serrer des lacets de chaussures.

## Revendications

1. Dispositif de blocage (1) d'au moins un élément filaire (2), comportant :
- au moins un organe de blocage (7) destiné à bloquer l'un au moins des éléments filaires (2) par coincement,
- un corps (4) doté d'une cavité (4d) configurée pour permettre le passage de l'un au moins des éléments filaires (2) et loger l'un au moins des organes de blocage (7) de sorte que l'un au moins des organes de blocage (7) soit mobile en translation dans la cavité (4d) suivant un premier axe jusqu'à une position de coincement de l'un au moins des éléments filaires (2),
- un capot de manoeuvre (3), mobile en translation suivant le premier axe par rapport au corps (4) et configuré pour autoriser le déplacement de l'organe de blocage (7) relativement au corps (4) suivant le premier axe,
- des moyens d'entraînement (5) de l'organe de blocage (7) au moyen du capot de manoeuvre (3),
**caractérisé en ce que** les moyens d'entraînement (5) permettent d'une part le déplacement libre de l'organe de blocage (7) selon le premier axe par rapport au capot de manoeuvre (3) et par rapport au corps (4), et permettent d'autre part le déplacement de l'organe de blocage (7) hors de la position de coincement par actionnement du capot de manoeuvre (3).

2. Dispositif de blocage (1) selon la revendication 1, dans lequel le capot de manoeuvre (3) comporte des éléments de butée limitant le déplacement du corps (4) par rapport au capot de manoeuvre (3) et autorisant un jeu de déplacement entre le corps (4) et le capot de manoeuvre (3), les moyens d'entraînement (5) permettant d'une part le déplacement libre de l'organe de blocage (7) selon le premier axe par rapport au capot de manoeuvre (3) et par rapport au corps (4) lorsque le capot de manoeuvre est en butée contre le corps (4).

3. Dispositif de blocage (1) selon l'une quelconque des revendications 1 ou 2, dans lequel les moyens d'entraînement (5) sont configurés pour se déplacer dans un trou (4c) aménagé dans une paroi du corps (4).

4. Dispositif de blocage (1) selon la revendication 3, dans lequel le trou (4c) est traversant et les moyens d'entraînement (5) sont configurés pour se déplacer dans un trou (3c) dans une paroi du capot de manoeuvre (3).

5. Dispositif de blocage (1) selon l'une quelconque des revendications 1 à 4, comportant des moyens élastiques (8) positionnés entre la paroi du corps (4) et l'un moins des organes de blocage (7), les moyens élastiques (8) étant configurés pour déplacer l'un au moins des organes de blocage (7) jusqu'à la position de coincement.

6. Dispositif de blocage (1) selon l'une quelconque des revendications 1 à 5, dans lequel le capot de manoeuvre (3) comporte une cavité (3b) configurée pour loger le corps (4) et permettre le passage de l'un au moins des éléments filaires (2).

7. Dispositif de blocage (1) selon l'une quelconque des revendications 1 à 6, dans lequel l'un au moins des organes de blocage (7) est un prisme configuré pour bloquer l'un au moins des éléments filaires (2) contre une paroi du corps (4).

8. Dispositif de blocage (1) selon l'une quelconque des revendications 1 à 7, dans lequel l'un au moins des organes de blocage (7) est une roue mobile en rotation suivant un deuxième axe orthogonal au premier axe, la roue étant configurée pour bloquer l'un au moins des éléments filaires (2) contre une paroi du corps (4).

9. Casque de protection comportant un dispositif de blocage (1) selon l'une quelconque des revendications 1 à 8, le dispositif de blocage (1) étant destiné à serrer ou desserrer des sangles serre-nuque du casque de protection.

10. Chaussure à lacets comportant un dispositif de blocage (1) selon l'une quelconque des revendications 1 à 8, le dispositif de blocage (1) étant destiné à serrer ou desserrer des lacets.

11. Sac à dos comportant un dispositif de blocage (1) selon l'une quelconque des revendications 1 à 8, le dispositif de blocage (1) étant destiné à serrer ou desserrer un cordon de fermeture du sac à dos.

12. Procédé de blocage d'au moins un élément filaire (2) au moyen d'un dispositif de blocage (1) selon l'une des revendications 1 à 11, le procédé comportant les étapes suivantes :
• appliquer une tension sur l'un au moins des éléments filaires (2) par rapport au capot de manoeuvre (3) de manière à déplacer l'un au moins des organes de blocage vers une position de déblocage,
• arrêter ladite tension sur l'un au moins des éléments filaires (2).

13. Procédé de déblocage d'au moins un élément filaire (2) au moyen d'un dispositif de blocage (1) selon l'une des revendications 1 à 11, le procédé comportant l'étape suivante :
• faire translater le capot de manoeuvre (3) par rapport au corps (4) jusqu'à ce qu'il engage le déplacement de l'un au moins des organes de blocage (7) vers une position de déblocage de l'un au moins des éléments filaires (2).

## Patentansprüche

1. Feststellvorrichtung (1) für mindestens ein Riemenelement (2), die umfasst:
- mindestens ein Feststellelement (7), das dazu bestimmt ist, mindestens eines der Riemenelemente (2) durch Festklemmen festzustellen,
- einen Körper (4), der einen Hohlraum (4d) aufweist, der so vorgesehen ist, dass er das Durchziehen mindestens eines Riemenelements (2) und das Aufnehmen mindestens eines der Feststellelemente (7) erlaubt, sodass mindestens eines der Feststellelemente (7) in dem Hohlraum (4d) translationsbeweglich entlang einer ersten Achse bis zu einer Verkeilungsposition mindestens eines der Riemenelemente (2) ist,
- eine Bedienungskappe (3), die bezüglich dem Körper (4) entlang der ersten Achse translationsbeweglich und so vorgesehen ist, dass sie das Bewegen des Feststellelements (7) bezüglich dem Körper (4) entlang der ersten Achse erlaubt,
- Mittel zum Antrieb (5) des Feststellelements (7) mittels der Bedienungskappe (3),
**dadurch gekennzeichnet, dass** die Antriebsmittel (5) einerseits die freie Bewegung des Feststellelements (7) bezüglich der Bedienungskappe (3) und bezüglich dem Körper (4) entlang der ersten Achse und andererseits die Bewegung des Feststellelements (7) durch Betätigen der Bedienungskappe (3) aus der Verkeilungsposition heraus erlauben.

2. Feststellvorrichtung (1) nach Anspruch 1, bei der die Bedienungskappe (3) Anschlagmittel aufweist, welche die Bewegung des Körpers (4) bezüglich der Bedienungskappe (3) einschränken und ein Bewegungsspiel zwischen dem Körper (4) und der Bedienungskappe (3) ermöglichen, wobei die Antriebsmittel (5) einerseits die freie Bewegung des Feststellelements (7) entlang der ersten Achse bezüglich der Bedienungskappe (3) und bezüglich dem Körper (4) erlauben, wenn die Bedienungskappe an den Körper (4) anliegt.

3. Feststellvorrichtung (1) nach einem der Ansprüche 1 oder 2, bei der die Antriebsmittel (5) so vorgesehen sind, dass sie sich in einer Öffnung (4c) bewegen, die in einer Wand des Körpers (4) vorgesehen ist.

4. Feststellvorrichtung (1) nach Anspruch 3, bei der die Öffnung (4c) durchgehend ist und die Antriebsmittel (5) so vorgesehen sind, dass sie sich in einer Öffnung (3c) in einer Wand der Bedienungskappe (3) bewegen.

5. Feststellvorrichtung (1) nach einem der Ansprüche 1 bis 4, die elastische Mittel (8) umfasst, die zwischen der Wand des Körpers (4) und mindestens einem der Feststellelemente (7) positioniert sind, wobei die elastischen Mittel (8) so vorgesehen sind, dass sie mindestens eines der Feststellelemente (7) bis in die Verkeilungsposition bewegen.

6. Feststellvorrichtung (1) nach einem der Ansprüche 1 bis 5, bei der die Bedienungskappe (3) einen Hohlraum (3b) umfasst, der so vorgesehen ist, dass er den Körper (4) aufnimmt und das Durchziehen mindestens eines der Riemenelemente (2) zulässt.

7. Feststellelement (1) nach einem der Ansprüche 1 bis 6, bei dem mindestens eines der Feststellelemente (7) ein Prisma ist, das so vorgesehen ist, dass es mindestens eines der Riemenelemente (2) gegen eine Wand des Körpers (4) blockiert.

8. Feststellelement (1) nach einem der Ansprüche 1 bis 7, bei dem mindestens eines der Feststellelemente (7) ein entlang einer zweiten, zur ersten orthogonalen Achse drehbewegliches Rad ist, das so vorgesehen ist, dass es mindestens eines der Riemenelemente (2) gegen eine Wand des Körpers (4) blockiert.

9. Schutzhelm, der mindestens eine Feststellvorrichtung (1) nach einem der Ansprüche 1 bis 8 umfasst, wobei die Feststellvorrichtung (1) dazu bestimmt ist, die Bänder des Nackenriemens des Schutzhelms festzuziehen oder freizugeben.

10. Schuh mit Schnürsenkeln, der eine Feststellvorrichtung (1) nach einem der Ansprüche 1 bis 8 umfasst, wobei die Feststellvorrichtung (1) dazu bestimmt ist, die Schnürsenkel festzuziehen oder zu lösen.

11. Rucksack, der eine Feststellvorrichtung (1) nach einem der Ansprüche 1 bis 8 umfasst, wobei die Feststellvorrichtung (1) dazu bestimmt ist, ein Verschlussband des Rucksacks festzuziehen oder zu lösen.

12. Verfahren zum Feststellen mindestens eines Riemenelements (2) mittels einer Feststellvorrichtung (1) nach einem der Ansprüche 1 bis 11, wobei das Verfahren folgende Schritte umfasst:
• Spannen mindestens eines der Riemenelemente (2) bezüglich der Bedienungskappe (3), um so zumindest eines der Feststellelemente in Richtung auf eine Freigabeposition zu bewegen,
• diese Spannung auf mindestens eines der Riemenelemente (2) zu unterbinden.

13. Verfahren zur Freigabe mindestens eines Riemenelements (2) mittels einer Feststellvorrichtung (1) nach einem der Ansprüche 1 bis 11, wobei das Verfahren folgenden Schritt umfasst:
• die Bedienungskappe (3) wird bezüglich dem Körper (4) so weit bewegt, bis sie das Bewegen mindestens eines der Feststellelemente (7) in Richtung auf eine Freigabeposition mindestens eines der Riemenelemente (2) einleitet.

## Claims

1. A clamping device (1) of at least one wire element (2), comprising:
- at least one clamping member (7) designed to block at least one of the wire elements (2) by clamping,
- a body (4) provided with a cavity (4d) to allow the passage of at least one of the wire elements (2) and to house at least one of the clamping members (7) so that at least one of the clamping members (7) is movable in translation in the cavity (4d) along a first axis to a blocking position of at least one of the wire elements (2),
- an operating cover (3), movable in translation along the first axis with respect to the body (4) and configured to allow movement of the clamping member (7) relatively to the body (4) along the first axis,
- drive means (5) for moving the clamping member (7) by means of the operating cover (3),
**characterized in that** the drive means (5) on the one hand enable free movement of the clamping member (7) along the first axis with respect to the operating cover (3) and with respect to the body (4), and on the other hand enable movement of the clamping member (7) so that the latter leaves the blocking position by actuation of the operating cover (3).

2. The clamping device (1) according to claim 1, wherein the operating cover (3) comprises stop elements limiting the movement of the body (4) with respect to the operating cover (3) and allowing a movement clearance between the body (4) and the operating cover (3), the drive means (5) enabling free movement of the clamping member (7) both along the first axis with respect to the operating cover (3) and with respect to the body (4) when the operating cover is up against the stop formed by the body (4).

3. The clamping device (1) according to either one of claims 1 or 2, wherein the drive means (5) are configured to move in a hole (4c) arranged in a wall of the body (4).

4. The clamping device (1) according to claim 3, wherein the hole (4c) is pass-through and the drive means (5) are configured to move in a hole (3c) in a wall of the operating cover (3).

5. The clamping device (1) according to any one of claims 1 to 4, comprising flexible means (8) positioned between the wall of the body (4) and at least one of the clamping members (7), the flexible means (8) being configured to move at least one of the clamping members (7) to the blocking position.

6. The clamping device (1) according to any one of claims 1 to 5, wherein the operating cover (3) comprises a cavity (3b) configured to house the body (4) and to enable the passage of at least one of the wire elements (2).

7. The clamping device (1) according to any one of claims 1 to 6, wherein at least one of the clamping members (7) is a prism configured to block at least one of the wire elements (2) against a wall of the body (4).

8. The clamping device (1) according to any one of claims 1 to 7, wherein at least one of the clamping members (7) is a wheel movable in rotation around a second axis orthogonal to the first axis, the wheel being configured to block at least one of the wire elements (2) against a wall of the body (4).

9. A protection helmet comprising a clamping device (1) according to any one of claims 1 to 8, the clamping device (1) being designed to tighten or loosen neckband straps of the protection helmet.

10. Lace-up shoes comprising a clamping device (1) according to any one of claims 1 to 8, the clamping device (1) being designed to tighten or loosen laces.

11. A backpack comprising a clamping device (1) according to any one of claims 1 to 8, the clamping device (1) being designed to tighten or loosen a closing cord of the backpack.

12. A method for clamping at least one wire element (2) by means of a clamping device (1) according to one of claims 1 to 11, the method comprising the following steps:
• applying a tension on at least one of the wire elements (2) with respect to the operating cover (3) so as to move at least one of the clamping members to a released position,
• stopping said tension on at least one of the wire elements (2).

13. A method for releasing at least one wire element (2) by means of a clamping device (1) according to one of claims 1 to 11, the method comprising the following step:
• making the operating cover (3) translate with respect to the body (4) until it engages movement of at least one of the clamping members (7) to a released position of at least one of the wire elements (2).
